(19) Europäisches Patentamt
European Patent Office
Office européen des brevets

(11) **EP 4 032 816 B1**

(12) **EUROPEAN PATENT SPECIFICATION**

(45) Date of publication and mention
of the grant of the patent:
**06.11.2024 Bulletin 2024/45**

(21) Application number: **20866217.1**

(22) Date of filing: **19.08.2020**

(51) International Patent Classification (IPC):
**B64G 1/28** *(2006.01)*      **B64G 1/24** *(2006.01)*

(52) Cooperative Patent Classification (CPC):
**B64G 1/369; B64G 1/245;** Y02T 90/00

(86) International application number:
**PCT/CN2020/109919**

(87) International publication number:
**WO 2021/052087 (25.03.2021 Gazette 2021/12)**

(54) **MANIPULATION METHOD SUITABLE FOR NON-REDUNDANT SGCMG GROUP**

MANIPULATIONSVERFAHREN FÜR EINE NICHT-REDUNDANTE SGCMG-GRUPPE

PROCÉDÉ DE MANIPULATION CONÇU POUR UN GROUPE SGCMG NON REDONDANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.09.2019 CN 201910872892**

(43) Date of publication of application:
**27.07.2022 Bulletin 2022/30**

(73) Proprietor: **Beijing Institute of Control Engineering**
**Beijing 100086 (CN)**

(72) Inventors:
• **YUAN, Li**
**Beijing 100086 (CN)**
• **LEI, Yongjun**
**Beijing 100086 (CN)**
• **LIU, Jie**
**Beijing 100086 (CN)**
• **ZHANG, Kebei**
**Beijing 100086 (CN)**
• **TIAN, Kefeng**
**Beijing 100086 (CN)**
• **YAO, Ning**
**Beijing 100086 (CN)**

(74) Representative: **Potter Clarkson**
**Chapel Quarter**
**Mount Street**
**Nottingham NG1 6HQ (GB)**

(56) References cited:
**CN-A- 103 592 848      CN-A- 103 869 704
CN-A- 103 869 704      CN-A- 105 388 902
CN-A- 106 218 922      CN-A- 107 544 466
CN-A- 107 544 466      CN-A- 107 992 062
CN-A- 110 597 274      CN-A- 110 597 274
CN-A- 110 697 085      CN-A- 110 723 316
US-A1- 2004 167 683    US-B1- 8 880 246**

• **ANDREA CORTI ET AL: "LPV methods for
spacecraft control: An overview and two case
studies", AMERICAN CONTROL CONFERENCE
(ACC), 2012, IEEE, 27 June 2012 (2012-06-27),
pages 1555 - 1560, XP032244968, ISBN:
978-1-4577-1095-7, DOI:
10.1109/ACC.2012.6315534**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present application claims priority to Chinese Patent Application No. 201910872892.7, titled "METHOD FOR DETERMINING GIMBAL ANGULAR VELOCITY OF SGCGM", filed on September 16, 2019 with the China National Intellectual Property Administration.

**FIELD**

The present disclosure is related to the field of spacecraft attitude control, and in particular to a manipulation method suitable for a non-redundant cluster of single-gimbal control moment gyroscopes (SGCMGs), which is applicable to high-stability attitude control using a cluster of control moment gyroscopes (CMGs).

**BACKGROUND**

In order to realize the fast attitude maneuver, a cluster of CMGs and a control algorithm are applied for the spacecraft. A widely applied solution is to control an attitude of a satellite using a cluster of control moment gyroscopes (see e.g. the document CN107544466). First, a Jacobian matrix, a singularity measure and a singularity-avoidance vector are calculated based on the measured gimbal angles of CMGs in real time. Then, the singularity-avoidance parameters are calculated based on the singularity measure. At last, the gimbal angular velocity command for each CMG is calculated based on the Jacobian matrix and the desired attitude control torque. In view of spacecraft dual requirements on three-axis attitude control and the singularity avoidance, a redundant configuration with at least four SGCMGs is generally adopted in the control system. In that all gimbal angular vectors corresponding to a particular CMG angular momentum usually form a connected area in the gimbal angular space, it is possible to avoid/escape from the gimbal singularity configuration through gimbal-reconfiguring. Therefore, the conventional research on CMG manipulation methods is mainly focused on the redundant configuration. However, CMG failure may occur in the long-term orbit operation due to some factors, such as the poor lubrication of mechanical bearings caused by the spacecraft long-term in-orbit fast attitude maneuver and radial eccentric load of the CMG high-speed rotor axis, and thereby invalidates the spacecraft. The CMG failures have occurred many times on the International Space Station.

Once only three SGCMGs are working in the SGCMG system due to malfunctions, the system becomes a non-redundant configured system. Different from a redundant system, gimbal angular vectors corresponding to a particular CMG angular momentum in the non-redundant system are finite isolated points in the gimbal angular space, so singularity avoidance/ escape cannot be realized through gimbal-reconfiguring. When the CMG angular momentum returns back to its initial value after the attitude maneuver, the gimbal angles cannot be ensured to return back to its initial state instead of an unexpected state. If the unexpected state is or is close to a singularity state, the attitude of the spacecraft may be out of control in subsequent attitude stabilization control. Therefore, the existing manipulation methods based on a redundant CMG system are not applicable to a non-redundant system.

**SUMMARY**

The manipulation method suitable for a non-redundant cluster of SGCMGs is provided by the present disclosure to solve the problems in the conventional technology. The method can not only be used in the redundant SGCMGs system, but also in the non-redundant three SGCMGs system which cannot realize the singularity avoidance/escape with a gimbal reconstruction strategy. Meanwhile, the spacecraft can avoid the loss of three-axis attitude maneuver ability resulting from the CMGs gimbal singular configuration when the spacecraft attitude maneuver is done.

The technical solutions according to the present disclosure are described as follows.

A manipulation method suitable for a non-redundant cluster of SGCMGs is provided. A spacecraft is equipped with n SGCMGs each having the same angular momentum amplitude. The method includes the following step 1) to 3).

In step 1, a nominal gimbal angle vector for the n SGCMGs is determined based on the configuration and the total angular momentum of the n SGCMGs. The total angular momentum $H$ of the n SGCMGs in step 1) is usually selected to be zero and the singularity measure $J_D$ of the n-SGCMGs system is expected to be the maximum with the determined nominal gimbal angle vector.

In step 2, the Jacobian matrix $J_{acob}$ of the n-SGCMGs system is determined based on the SGCMGs real-time gimbal angles. In addition, the deviation angle vector $\Delta\delta$ of the gimbal angle vector of the SGCMGs from the nominal gimbal angle vector $\delta_0$ is determined based on the real-time gimbal angle and the nominal gimbal angle of the configuration of the n SGCMGs determined in step 1).

In step 3, the gimbal angular velocity command vector $\dot{\delta}_r$ of the SGCMGs is determined based on the Jacobian matrix $J_{acob}$ and the deviation angle vector $\Delta\delta$, determined in step 2), and the gimbal angular velocity command vector $\dot{\delta}_r$ of the SGCMGs is used to drive the SGCMG system.

The Jacobian matrix $J_{\text{acob}}$ of n-SGCMGs system in step 2 is determined as follows:

$$J_{\text{acob}} = A\cos\boldsymbol{\delta} - B\sin\boldsymbol{\delta},$$

$$\sin\boldsymbol{\delta} = \begin{bmatrix} \sin\delta_1 & & & & \\ & \ddots & & & \\ & & \sin\delta_i & & \\ & & & \ddots & \\ & & & & \sin\delta_n \end{bmatrix}, \text{ and } \cos\boldsymbol{\delta} = \begin{bmatrix} \cos\delta_1 & & & & \\ & \ddots & & & \\ & & \cos\delta_i & & \\ & & & \ddots & \\ & & & & \cos\delta_n \end{bmatrix}$$

Where the n SGCMGs are numbered from 1 to n, the variable $\delta_i$ represents the gimbal angle of the ith SGCMG, and i is greater than or equal to 1 and less than or equal to n. The variable $A$ and $B$ represent a 3×n dimensional coefficient matrices related to installation orientations of gimbal axes of the n SGCMGs. The ith column of the matrix $A$ denotes the angular momentum direction of a high-speed rotor of the ith SGCMG when the gimbal angle of the ith SGCMG is equal to 90°, and the ith column of the matrix $B$ denotes the angular momentum direction of the high-speed rotor of the ith SGCMG when the gimbal angle of the ith SGCMG is equal to 0°.

Compared with the conventional technology, the present disclosure has the following advantages.

1) With the method in the present disclosure, the existing SGCMGs configuration system is fully utilized. A new rule for manipulating the SGCMGs system is obtained based on multi-objective optimization technology, solving the problems that the non-redundant SGCMGs system cannot realize singularity avoidance/escape and the satellite loses ability of three-axis attitude control.

2) With the method according to the present disclosure, by constructing a multi-objective optimization cost function considering the deviation of the gimbal angle from the nominal value, the amplitude of the gimbal angle command, and the output torque deviation, a multi-objective CMG manipulation rule is obtained in an optimal manner, reconciling the contradiction between singularity avoidance and three-axis attitude control, and ensuring high-performance attitude maneuver control even in the non-redundant SGCMGs system.

## BRIEF DESCRIPTION OF THE DRAWINGS

Figure 1 is a flowchart of the present method according to the present disclosure;

Figure 2 shows curves resenting three-axis attitude angles and angular velocities of a spacecraft; and

Figure 3 shows curves representing low-velocity gimbal angular velocity commands for SGCMGs.

## DETAILED DESCRIPTION OF EMBODIMENTS

A cluster of single-gimbal control moment gyroscopes is referred to as a cluster of SGCMGs. Deploying a cluster of SGCMGs is a major trend for spacecraft high-performance attitude maneuver control in the world. Fast attitude maneuver for a long-term in-orbit spacecraft may cause the SGCMGs gimbal angle vector to be close to or trapped in a singularity state after attitude maneuver, resulting in an instable system. In view of spacecraft dual requirements on three-axis attitude control and singularity avoidance, a manipulation method suitable for the non-redundant SGCMGs system is provided according to the present disclosure. A multi-objective optimization cost function is creatively proposed by considering the deviation of a gimbal angle from the nominal value, the amplitude of gimbal angle command, and the output torque deviation. A new rule for manipulating a SGCMG system is obtained based on multi-objective optimization technology. With the method, singularity avoidance in attitude maneuver and recovery to the nominal gimbal angle after the attitude maneuver are realized. The contradiction between singularity avoidance and attitude control is reconciled, and the high-performance attitude maneuver in any direction is ensured, thereby improving ability of the attitude maneuver for the non-redundant SGCMGs system greatly. The effectiveness of the method is verified by mathematical simulation.

The method according to the present disclosure includes the following steps 1 to 3.

In step 1, for each of different clusters of SGCMGs, a nominal gimbal angle vector of the cluster is determined based on factors that the total angular momentum of the cluster is zero, the singularity measure of a configuration of the CMG cluster is large, and the SGCMGs system has the same moment output capacity in all directions as far as possible.

In step 2, the gimbal angle vector $\delta$ of the SGCMGs is collected in real time. The Jacobian matrix $J_{acob}$ of gimbal angle kinematic equation of the n-SGCMGs system and the deviation vector $\Delta\delta = \delta_0 - \delta$ of the gimbal angle from the nominal gimbal angle are calculated.

In step 3, a comprehensive multi-objective optimization cost function is constructed considering the deviation of the gimbal angle from the nominal gimbal angle, the amplitude of gimbal angle command, and the output torque deviation. A gimbal angular command vector $\delta_r$ for the SGCMGs is calculated by minimizing the cost function. In implementation, singularity avoidance parameters $\alpha_1$ and $\alpha_2$ are adjusted in real time based on periodic attitude maneuver and the singularity measure. Further, a gimbal angular velocity command vector $\dot{\delta}_r$ for the CMGs can be also calculated based on the Jacobian matrix $J_{acob}$ and the desired attitude control torque $\tau_r$. Attitude control is then performed base on the afore-mentioned input.

In a case that a new cluster of CMGs is used, it is required to adjust the attitude angular rate, the angular acceleration and the control parameters for spacecraft attitude maneuvers based on an envelope of angular momentums of the new cluster.

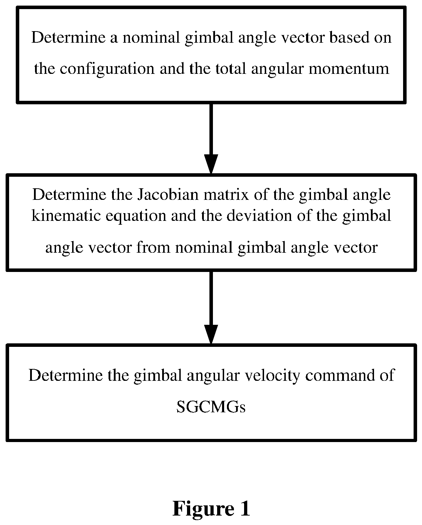

As shown in Figure 1, the manipulation method suitable for a non-redundant cluster of SGCMGs is provided according to the present disclosure. The method includes the following steps 1) to 3).

In step 1), n SGCMGs are numbered from 1 to n. A nominal gimbal angle vector $\delta_0 = [\delta_{01} \ldots \delta_{0i} \ldots \delta_{0n}]^T$ is determined for a configuration of the n-SGCMGs, where $\delta_{0i}$ represents a nominal gimbal angle of ith SGCMG, the variable $i$ is greater than or equal to 1 and less than or equal to n, and n is a positive integer greater than or equal to 3.

The determined nominal gimbal angle vector of the configuration of the n SGCMGs usually brings the total angular momentum $H$ of the n-SGCMGs system to be zero and the singularity measure $J_D$ of the system to be large.

That is, $H = h(A \sin \delta_0 + B \cos \delta_0) E = [0 \ 0 \ 0]^T$ and $J_D = \det(J_{acob} \cdot J_{acob}^T)$ is large, where $J_{acob} = A \cos \delta_0 - B \sin \delta_0$, and $h$ represents the angular momentum amplitude of each SGCMG high-speed rotor. The satellite is provided with n SGCMGs each having the same angular momentum. $H$ represents the total angular momentum of the n SGCMGs. $A$ and $B$ represent coefficient matrices related to installation orientations of gimbal axes of the SGCMGs. The ith column of the matrix $A$ corresponds to the angular momentum direction of a high-speed rotor of the ith SGCMG in a case of a gimbal angle of the ith SGCMG being 90°. The $i$th column of the matrix $B$ corresponds to the angular momentum direction of a high-speed rotor of the ith SGCMG in a case of the gimbal angle of the ith SGCMG being 0°. The variable $E$ represents an n-dimensional vector $E = [1 \ 1 \ldots 1]^T$. The variable $J_D$ represents the singularity measure of the n-SGCMGs system. The symbol det represents solving a determinant. The matrix $\sin \delta_0$ and $\cos \delta_0$ respectively represent a sine diagonal matrix and a cosine diagonal matrix corresponding to the nominal gimbal angle of the ith SGCMG. The matrix $\sin \delta_0$ and $\cos \delta_0$ are expressed respectivelly as:

$$\sin \delta_0 = \begin{bmatrix} \sin \delta_{01} & & 0 \\ & \ddots & \\ 0 & & \sin \delta_{0n} \end{bmatrix}, \text{ and } \cos \delta_0 = \begin{bmatrix} \cos \delta_{01} & & 0 \\ & \ddots & \\ 0 & & \cos \delta_{0n} \end{bmatrix}.$$

In step 2), given n SGCMGs with gimbal angles of $\delta_1 \ \delta_2 \ldots \delta_n$, respectively, the Jacobian matrix $J_{acob}$ is determined based on the real-time gimbal angles $\delta_i$, where $i$ is greater than or equal to 1 and less than or equal to n. In addition, the deviation $\Delta\delta$ of the gimbal angle from the nominal gimbal angle is determined based on the real-time gimbal angle vector of the SGCMGs and the nominal gimbal angle vector of the configuration of the n SGCMGs determined in step 1).

The Jacob matrix $J_{acob}$ is determined according to:

$$J_{acob} = A \cos \delta - B \sin \delta,$$

$$\sin\boldsymbol{\delta} = \begin{bmatrix} \sin\delta_1 & & & \\ & \ddots & & \\ & & \sin\delta_i & \\ & & & \ddots & \\ & & & & \sin\delta_n \end{bmatrix}, \text{ and } \cos\boldsymbol{\delta} = \begin{bmatrix} \cos\delta_1 & & & \\ & \ddots & & \\ & & \cos\delta_i & \\ & & & \ddots & \\ & & & & \cos\delta_n \end{bmatrix},$$

where, $\sin\delta$ represents a diagonal matrix of sine values of the gimbal angles, and $\cos\delta$ represents a diagonal matrix of cosine values of the gimbal angles. The element in a diagonal of the $\sin\delta$ represents sine of the $i$th SGCMG gimbal angle $\delta_i$, and the element in a diagonal of the $\cos\delta$ represents cosine of the $i$th SGCMG gimbal angle $\delta_i$, where $i$ is greater than or equal to 1 and less than or equal to n. **A** and **B** represent 3×n-dimensional coefficient matrices related to installation orientations of gimbal axes of the n-SGCMGs system. The $i$th column of the matrix **A** corresponds to the angular momentum direction of a high-speed rotor of the ith SGCMG in a case of a gimbal angle of the $i$th SGCMG being 90°, and the ith column of the matrix **B** corresponds to the angular momentum direction of a high-speed rotor of the ith SGCMG in a case of the gimbal angle of the $i$th SGCMG being 0°.

The deviation vector $\Delta\delta$ of the gimbal angle from the nominal gimbal angle is determined according to:

$$\Delta\boldsymbol{\delta} = \boldsymbol{\delta}_0 - \boldsymbol{\delta},$$

$$\boldsymbol{\delta}_0 = \begin{bmatrix} \delta_{01} & ...\delta_{0i}... & \delta_{0n} \end{bmatrix}^T, \text{ and } \boldsymbol{\delta} = \begin{bmatrix} \delta_1 & ...\delta_i... & \delta_n \end{bmatrix}^T,$$

where $\delta_{0i}$ represents the nominal gimbal angle of the $i$th SGCMG and $\delta_i$ represents the gimbal angle of the ith SGCMG.

In Step 3), by constructing a multi-objective optimization cost function considering a deviation of the gimbal angle from the nominal gimbal angle, the amplitude of the gimbal angle command and the output torque error, a SGCMG manipulation rule synthesizing the above objectives is obtained in an optimal manner. The gimbal angular velocity command $\dot{\delta}_r$ of the SGCMGs is determined, according to the multi-objective optimal cost function, based on the torque command $\tau_r$ obtained from the attitude control law, the Jacob matrix $\boldsymbol{J}_{acob}$ and the deviation of the gimbal angle from the nominal gimbal angle determined in step 2). The gimbal angular velocity command of the SGCMGs is utilized to drive the gimbal mechanism parts of the SGCMGs to generate the satellite attitude control torque.

In step 3), the gimbal angular velocity command $\dot{\delta}_r$ of the SGCMGs is determined according to:

$$\dot{\boldsymbol{\delta}}_r = \left(\boldsymbol{\delta}_r - \boldsymbol{\delta}\right)\big/T_s,$$

$$\boldsymbol{\delta}_r = \alpha_1 \left(\left(\alpha_1 + \alpha_2\right)\mathbf{I} + \boldsymbol{J}_{acob}^{\mathrm{T}} \cdot \boldsymbol{J}_{acob}\right)^{-1} \cdot \Delta\boldsymbol{\delta} + \boldsymbol{\delta}$$

$$-T_s \left(\left(\alpha_1 + \alpha_2\right)\mathbf{I} + \boldsymbol{J}_{acob}^{\mathrm{T}} \cdot \boldsymbol{J}_{acob}\right)^{-1} \cdot \boldsymbol{J}_{acob}^{\mathrm{T}} \cdot \boldsymbol{\tau}_r \big/h$$

where $\delta_r$ represents the gimbal angular command, $T_s$ represents a sampling period of the SGCMGs gimbal angular, $h$ represents the angular momentum amplitude of the SGCMGs' high-speed rotor, **I** represents an n-dimensional unit matrix, and $\alpha_1$ and $\alpha_2$ respectively represent designed singularity avoidance parameters, where each of $\alpha_1$ and $\alpha_2$ is usually designed to be greater than or equal to 0, and may be adjusted in real time based on periodic attitude maneuver and the singularity measure.

In Example 1, a spacecraft is equipped with six SGCMGs in pentapyramid configuration. The CMGs are numbered as CMG1, CMG2, CMG3, CMG4, CMG5 and CMG6. The multi-objective optimal manipulation control method for the SGCMGs system, as shown in the flowchart in Figure 1 as follows.

1) In the initial operation of the spacecraft, all CMGs operate normally. In this case, a nominal gimbal angle vector $\delta_{CMG0}$= [88.03 -92.32 -92.41 60.740591 -116.144 -145.265]$^T$( deg ) is selected, so that the total angular momentum **H** for this configuration is nearly zero, and the singularity measure $J_D$ is equal to 7.299, and the CMGs have substantially the same moment output capacity in all directions.

2) 2000 seconds later, assume the CMG1, the CMG2 and the CMG5 to be malfunctioned. The other three CMGs are operated. In this case, with the selected nominal gimbal angle vector $\delta_{CMGO}$=[0 0 242.2276997 297.7723 0 270] $^T$ ( deg ) , the corresponding total angular momentum $H$ for the configuration is nearly zero, and singularity measure $J_D$ is equal to 0.72, and the CMGs have substantially the same moment output capacity in all directions.

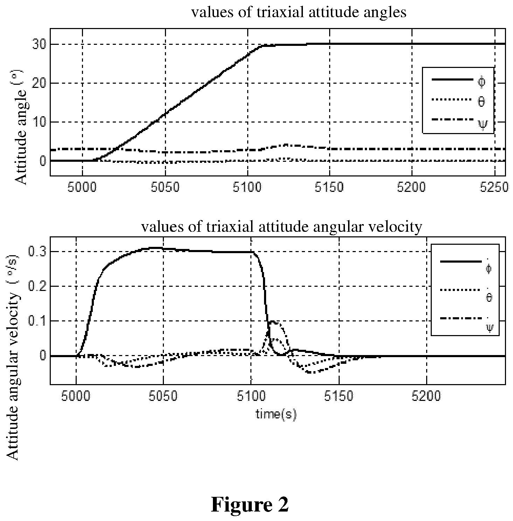

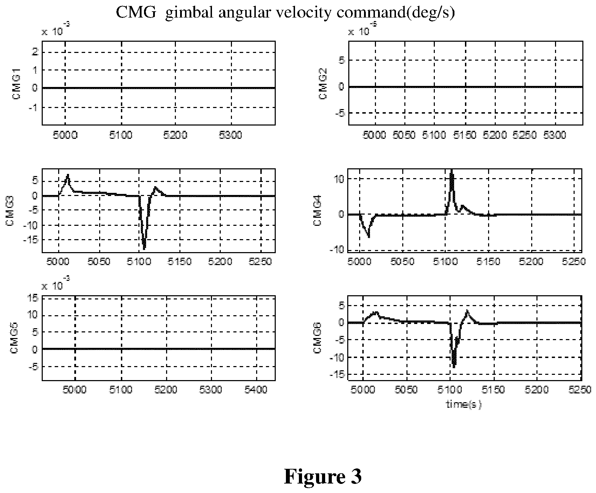

3) 5000 seconds later, a maneuver with a roll angle command of 30° is scheduled. In this case, singularity avoidance parameters $\alpha_1$ and $\alpha_2$ are selected as the multi-objective optimization method, based on the real time gimbal angles measured from the CMG3, the CMG4 and the CMG6. In addition, the desired attitude control torque is calculated based on the spacecraft attitude angle error and the angular rate error. Thus, the gimbal angular velocity command for each CMG is calculated to perform attitude maneuver control. Figure 3 shows curves representing gimbal angular velocity commands for the three CMGs. Figure 2 shows curves representing the tri-axial attitude angle and the angular velocity of the spacecraft. Attitude maneuver and attitude stabilization control are achieved normally.

**Claims**

1. A manipulation method applicable for a non-redundant cluster of Single Gimbal Control Moment Gyroscope SGCMGs, wherein a spacecraft is equipped with n SGCMGs each having a same angular momentum, wherein n is a positive integer greater than or equal to 3; **characterised by** the fact that
the method comprises:

   1) determining a nominal gimbal angle vector for a configuration of the n-SGCMGs based on the configuration and a total angular momentum of the n-SGCMGs;
   2) determining a Jacobian matrix $J_{acob}$ of a gimbal angle kinematic equation based on real-time gimbal angles of the n-SGCMGs, and determining a deviation $\Delta\delta$ of a gimbal angle vector from the nominal gimbal angle vector based on the gimbal angle vector and the nominal gimbal angle vector of the n SGCMGs determined in step 1); and
   3) determining a gimbal angular velocity command $\dot{\delta}_r$ of the SGCMGs based on the Jacobian matrix $J_{acob}$ and the deviation $\Delta\delta$ determined in step 2).

2. The manipulation method according to claim 1, wherein
the nominal gimbal angle vector of the configuration of the n SGCMGs in step 1) brings the total angular momentum $H$ of the n-SGCMGs system to be zero and the singularity measure $J_D$ of the system to be maximum.

3. The manipulation method according to claim 1 or 2, wherein the Jacobian matrix of the gimbal angle kinematic equation in step 2) is determined according to:

$$J_{acob} = A\cos\boldsymbol{\delta} - B\sin\boldsymbol{\delta},$$

$$\sin\boldsymbol{\delta} = \begin{bmatrix} \sin\delta_1 & & & \\ & \ddots & & \\ & & \sin\delta_i & \\ & & & \ddots \\ & & & & \sin\delta_n \end{bmatrix}, \text{ and } \cos\boldsymbol{\delta} = \begin{bmatrix} \cos\delta_1 & & & \\ & \ddots & & \\ & & \cos\delta_i & \\ & & & \ddots \\ & & & & \cos\delta_n \end{bmatrix},$$

wherein:

   $\delta_i$ represents a gimbal angle of an $i$th SGCMG, $i$ is greater than or equal to 1 and less than or equal to n, and the n SGCMGs are numbered from 1 to n; and
   $A$ and $B$ represent $3 \times$ n-dimensional coefficient matrices related to installation orientations of gimbal axes of the n SGCMGs, an ith column of the matrix $A$ corresponds to an angular momentum direction of a high-speed rotor of the ith SGCMG in a case of the gimbal angle of the ith SGCMG being equal to 90°, and the $i$th column of the matrix $B$ corresponds to the angular momentum direction of the high-speed rotor of the ith SGCMG in a case of the gimbal angle of the ith SGCMG being equal to 0°.

4. The manipulation method according to claim 3, wherein the deviation $\Delta\delta$ in step 2) is determined according to:

$$\Delta\boldsymbol{\delta} = \boldsymbol{\delta}_0 - \boldsymbol{\delta},$$

$$\boldsymbol{\delta}_0 = \begin{bmatrix} \delta_{01} & ...\delta_{0i}... & \delta_{0n} \end{bmatrix}^T, \text{ and } \boldsymbol{\delta} = \begin{bmatrix} \delta_1 & ...\delta_i... & \delta_n \end{bmatrix}^T,$$

wherein $\delta_0$ represents the nominal gimbal angle vector of the configuration of the n SGCMGs, and $\delta_{0i}$ represents a nominal gimbal angle of the $i$th SGCMG.

5. The manipulation method according to claim 4, wherein the gimbal angular velocity command $\dot{\delta}_r$ of the SGCMGs in step 3) is determined according to:

$$\dot{\boldsymbol{\delta}}_r = (\boldsymbol{\delta}_r - \boldsymbol{\delta})/T_s,$$

and

$$\boldsymbol{\delta}_r = \alpha_1 \left( (\alpha_1 + \alpha_2)\mathbf{I} + \boldsymbol{J}_{acob}{}^T \cdot \boldsymbol{J}_{acob} \right)^{-1} \cdot \Delta\boldsymbol{\delta} + \boldsymbol{\delta}$$

$$- T_s \left( (\alpha_1 + \alpha_2)\mathbf{I} + \boldsymbol{J}_{acob}{}^T \cdot \boldsymbol{J}_{acob} \right)^{-1} \cdot \boldsymbol{J}_{acob}{}^T \cdot \boldsymbol{\tau}_r/h$$

wherein:

$T_s$ represents a sampling period of the SGCMGs;
h represents the angular momentum amplitude of the SGCMGs;
I represents an n-dimensional unit matrix;
$\alpha_1$ and $\alpha_2$ represent designed singularity avoidance parameters, and $\alpha_1$ and $\alpha_2$ are greater than or equal to 0;
$\delta_r$ represents the gimbal angular command; and
$\tau_r$ represents a desired attitude control torque.

**Patentansprüche**

1. Manipulationsverfahren für einen nicht-redundanten Cluster von einzelnen kardanisch gesteuerten Momentgyroskopen SGCMGs, wobei ein

Raumfahrzeug mit n SGCMGs ausgestattet ist, die jeweils den gleichen Drehmoment aufweisen, wobei n eine positive ganze Zahl größer als oder gleich 3 ist; **dadurch gekennzeichnet, dass**
das Verfahren Folgendes umfasst:

1) Bestimmen eines nominalen Kardanwinkelvektors für eine Konfiguration der n-SGCMGs basierend auf der Konfiguration und einem Gesamtdrehmoment der n-SGCMGs;
2) Bestimmen einer Jacobimatrix $J_{acob}$ einer Kardanwinkelkinematikgleichung basierend auf Echtzeitkardanwinkeln der n-SGCMGs, und Bestimmen einer Abweichung $\Delta\delta$ eines Kardanwinkelvektors von dem nominalen Kardanwinkelvektor basierend auf dem Kardanwinkelvektor und dem nominalen Kardanwinkelvektor der n-SGCMGs, die in Schritt 1) bestimmt wurden; und
3) Bestimmen eines Kardanwinkelgeschwindigkeitsbefehls $\delta_r$ der SGCMGs basierend auf der Jacobimatrix $J_{acob}$ und der in Schritt 2) bestimmten Abweichung $\Delta\delta$.

2. Manipulationsverfahren nach Anspruch 1, wobei
der nominale Kardanwinkelvektor der Konfiguration der n SGCMGs in Schritt 1) den Gesamtdrehmoment $H$ des n-SGCMGs-Systems auf Null und das Singularitätsmaß $J_D$ des Systems auf ein Maximum bringt.

3. Manipulationsverfahren nach Anspruch 1 oder 2, wobei die Jacobimatrix der Kardanwinkelkinematikgleichung in Schritt 2) nach Folgendem bestimmt wird:

$$J_{\text{acob}} = \mathbf{A} \cos\boldsymbol{\delta} - \mathbf{B} \sin\boldsymbol{\delta},$$

$$\sin\boldsymbol{\delta} = \begin{bmatrix} \sin\delta_1 & & & \\ & \ddots & & \\ & & \sin\delta_i & \\ & & & \ddots \\ & & & & \sin\delta_n \end{bmatrix}, \text{ und } \cos\boldsymbol{\delta} = \begin{bmatrix} \cos\delta_1 & & & \\ & \ddots & & \\ & & \cos\delta_i & \\ & & & \ddots \\ & & & & \cos\delta_n \end{bmatrix},$$

wobei:

$\delta_i$ einen Kardanwinkel eines $i$ten SGCMG darstellt, $i$ größer oder gleich 1 und kleiner ist als oder gleich n, und die n SGCMGs von 1 bis n nummeriert sind; und

$\mathbf{A}$ und $\mathbf{B}$ 3 X n-dimensionale Koeffizientenmatrizen darstellen, die sich auf die Installationsausrichtungen der Kardanachsen der n SGCMGs beziehen, eine $i$te Spalte der Matrix $\mathbf{A}$ einer Drehimpulsrichtung eines Hochgeschwindigkeitsrotors des $i$ten SGCMG entspricht, wenn der Kardanwinkel des $i$ten SGCMG gleich 90° ist, und die $i$te Spalte der Matrix $\mathbf{B}$ der Drehimpulsrichtung des Hochgeschwindigkeitsrotors des $i$ten SGCMG entspricht, wenn der Kardanwinkel des $i$ten SGCMG gleich 0° ist.

4. Manipulationsverfahren nach Anspruch 3, wobei die Abweichung $\Delta\delta$ in Schritt 2) nach Folgendem bestimmt wird:

$$\Delta\boldsymbol{\delta} = \boldsymbol{\delta}_0 - \boldsymbol{\delta},$$

$$\boldsymbol{\delta}_0 = \begin{bmatrix} \delta_{01} & ...\delta_{0i}... & \delta_{0n} \end{bmatrix}^T, \text{und } \boldsymbol{\delta} = \begin{bmatrix} \delta_1 & ...\delta_i... & \delta_n \end{bmatrix}^T,$$

wobei $\delta_0$ den nominalen Kardanwinkelvektor der Konfiguration der n SGCMGs darstellt, und $\delta_{0i}$ einen nominalen Kardanwinkel des $i$ten SGCMGs darstellt.

5. Manipulationsverfahren nach Anspruch 4, wobei der Kardanwinkelgeschwindigkeitsbefehl $\dot{\delta}_r$ der SGCMGs in Schritt 3) nach Folgendem bestimmt wird:

$$\dot{\boldsymbol{\delta}}_r = \left( \boldsymbol{\delta}_r - \boldsymbol{\delta} \right) / T_s,$$

und

$$\boldsymbol{\delta}_r = \alpha_1 \left( \left( \alpha_1 + \alpha_2 \right)\mathbf{I} + \boldsymbol{J}_{acob}{}^T \cdot \boldsymbol{J}_{acob} \right)^{-1} \cdot \Delta\boldsymbol{\delta} + \boldsymbol{\delta}$$

$$- T_s \left( \left( \alpha_1 + \alpha_2 \right)\mathbf{I} + \boldsymbol{J}_{acob}{}^T \cdot \boldsymbol{J}_{acob} \right)^{-1} \cdot \boldsymbol{J}_{acob}{}^T \cdot \boldsymbol{\tau}_r / h$$

wobei:

$T_s$ einen Stichprobenzeitraum der SGCMGs darstellt;
$h$ die Drehmomentamplitude der SGCMGs darstellt;
$\mathbf{I}$ eine n-dimensionale Einheitsmatrix darstellt;
$\alpha_1$ und $\alpha_2$ Parameter zur Vermeidung von Singularitäten darstellen, und $\alpha_1$ und $\alpha_2$ größer als oder gleich 0 sind;
$\delta_r$ den Kardanwinkelbefehl darstellt; und
$\tau_r$ ein gewünschtes Lagesteuerungsmoment darstellt.

**Revendications**

1. Procédé de manipulation applicable à un groupe non redondant d'actionneurs gyroscopiques à cardan unique (SGCMG), dans lequel un engin spatial est équipé de n SGCMG ayant chacun un moment cinétique identique, où n est un entier positif supérieur ou égal à 3 ; **caractérisé en ce que** le procédé comprend :

   1) la détermination d'un vecteur des angles de cardan de référence pour une configuration des n-SGCMG sur la base de la configuration et d'un moment cinétique total des n-SGCMG ;
   2) la détermination d'une matrice jacobienne $J_{\mathrm{acob}}$ d'une équation cinématique des angles de cardan sur la base des angles de cardan en temps réel des n-SGCMG, et la détermination d'un écart $\Delta\delta$ d'un vecteur des angles de cardan au vecteur des angles de cardan de référence sur la base du vecteur des angles de cardan et du vecteur des angles de cardan de référence des n SGCMG déterminé à l'étape 1) ; et
   3) la détermination d'une commande $\dot{\delta}_r$ de vitesse angulaire de cardan des n SGCMG sur la base de la matrice jacobienne $J_{\mathrm{acob}}$ et de l'écart $\Delta\delta$ déterminés à l'étape 2).

2. Procédé de manipulation selon la revendication 1, dans lequel le vecteur des angles de cardan de référence de la configuration des n SGCMG à l'étape 1) amène le moment cinétique total $H$ du système de n SGCMG à zéro et la mesure de singularité $J_D$ du système au maximum.

3. Méthode de manipulation selon la revendication 1 ou 2, dans laquelle la matrice jacobienne de l'équation cinématique des angles de cardan à l'étape 2) est déterminée selon :

$$J_{\mathrm{acob}} = A\cos\boldsymbol{\delta} - B\sin\boldsymbol{\delta},$$

$$\sin\boldsymbol{\delta} = \begin{bmatrix} \sin\delta_1 & & & \\ & \ddots & & \\ & & \sin\delta_i & \\ & & & \ddots \\ & & & & \sin\delta_n \end{bmatrix}, \text{ et } \cos\boldsymbol{\delta} = \begin{bmatrix} \cos\delta_1 & & & \\ & \ddots & & \\ & & \cos\delta_i & \\ & & & \ddots \\ & & & & \cos\delta_n \end{bmatrix},$$

où :

   $\delta_i$ représente un angle de cardan d'un $i$-ème SGCMG, $i$ est supérieur ou égal à 1 et inférieur ou égal à n et les n SGCMG sont numérotés de 1 à n ; et
   $A$ et $B$ représentent des matrices de coefficients de dimension $3 \times n$ relatives aux orientations d'installation des axes de cardan des n SGCMG, une $i$-ème colonne de la matrice $A$ correspond à une direction du moment cinétique d'un rotor grande vitesse et du $i$-ème SGCMG dans un cas où l'angle de cardan du $i$-ème SGCMG est égal à 90°, et la $i$-ème colonne de la matrice $B$ correspond à la direction du moment cinétique du rotor grande vitesse du $i$-ème SGCMG dans un cas où l'angle de cardan du $i$-ème SGCMG est égal à 0°.

4. Procédé de manipulation selon la revendication 3, dans lequel l'écart $\Delta\delta$ à l'étape 2) est déterminé selon :

$$\Delta\boldsymbol{\delta} = \boldsymbol{\delta}_0 - \boldsymbol{\delta},$$

$$\boldsymbol{\delta}_0 = \begin{bmatrix} \delta_{01} & \ldots\delta_{0i}\ldots & \delta_{0n} \end{bmatrix}^T, \text{ et } \boldsymbol{\delta} = \begin{bmatrix} \delta_1 & \ldots\delta_i\ldots & \delta_n \end{bmatrix}^T,$$

où $\boldsymbol{\delta_0}$ représente le vecteur des angles de cardan de référence de la configuration des n SGCMG et $\delta_{0i}$ représente un angle de cardan de référence du $i$-ème SGCMG.

5. Procédé de manipulation selon la revendication 4, dans lequel la commande $\delta_r$ de vitesse angulaire de cardan des SGCMG à l'étape 3) est déterminée selon :

$$\dot{\delta}_r = \left(\delta_r - \delta\right)/T_s \,,$$

et

$$\delta_r = \alpha_1 \left(\left(\alpha_1 + \alpha_2\right)\mathbf{I} + J_{acob}^{\mathrm{T}} \cdot J_{acob}\right)^{-1} \cdot \Delta\delta + \delta$$

$$-T_s \left(\left(\alpha_1 + \alpha_2\right)\mathbf{I} + J_{acob}^{\mathrm{T}} \cdot J_{acob}\right)^{-1} \cdot J_{acob}^{\mathrm{T}} \cdot \tau_r/h$$

où :

$T_s$ représente une période d'échantillonnage des SGCMG ;
h représente l'amplitude de moment cinétique des SGCMG ;
$\mathbf{I}$ représente une matrice identité de dimension n ;
$\alpha_1$ et $\alpha_2$ représentent des paramètres désignés d'évitement de singularité et $\alpha_1$ et $\alpha_2$ sont supérieurs ou égaux à 0 ;
$\delta_r$ représente la commande angulaire de cardan ; et
$\tau_r$ représente un couple de commande d'attitude souhaité.

Determine a nominal gimbal angle vector based on
the configuration and the total angular momentum

Determine the Jacobian matrix of the gimbal angle
kinematic equation and the deviation of the gimbal
angle vector from nominal gimbal angle vector

Determine the gimbal angular velocity command of
SGCMGs

**Figure 1**

values of triaxial attitude angles

values of triaxial attitude angular velocity

**Figure 2**

CMG gimbal angular velocity command(deg/s)

**Figure 3**

**EP 4 032 816 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910872892

- CN 107544466